# EUROPEAN PATENT SPECIFICATION

(11) **EP 0 423 933 B1**
(45) Date of publication and mention of the grant of the patent: **05.04.1995**
(21) Application number: 90309934.9
(22) Date of filing: 11.09.1990
(51) Int. Cl.: G06F 11/10, G06F 11/00

(54) **Personal computer memory bank parity error indicator**
Speicherbankparitätsfehleranzeiger für Personalrechner
Indicateur d'erreur de parité de banc de mémoire d'ordinateur personnel

(30) Priority: 16.10.1989 US 422204
(43) Date of publication of application: 24.04.1991
(73) Proprietor: International Business Machines Corporation, Armonk, N.Y. 10504 (US)
(72) Inventor: Capps, Louis Bennie, Boynton Beach, Florida 33435 (US); Forster, Jimmy Grant, Boca Raton, Florida 33496 (US); Price, William Everett, Boca Raton, Florida 33486 (US); Rupe, Robert William, Delray Beach, Florida (US); Uplinger, Kenneth Allen, Boca Raton, Florida 33428 (US)
(74) Representative: Burt, Roger James, Dr.

(56) References cited:
- DE-A- 3 716 594
- GB-A- 2 179 183
- PATENT ABSTRACTS OF JAPAN vol. 5, no. 73 (P-61)(745) (NIPPON DENSHIN DENWA KOSHA ) 24 February 1981 & JP-5 619 593
- IBM TECHNICAL DISCLOSURE BULLETIN vol. 20, no. 11B, April 1978,pages 4838 - 4839; P. FAVRE: 'Microcode Integrity Checking'.

## Description

The present invention relates to a parity error indicator for indicating the bank from which a parity error arose in a personal computer having a banked memory.

Parity checking is a well known method for detecting errors in transmitting data. In accordance with such method, a parity bit is or is not added to a packet, e.g. a byte, of binary digits so as to maintain the total number of bits, including the parity bit, as an odd or an even sum. When the packet is transmitted, the total number of bits is counted and if the sum is not odd or even as it is supposed to be, a parity error has occurred. Current high performance personal computers have thirty two bit wide memory data paths in which data is arranged in four eight bytes each byte being associated with one parity bit. A parity checking circuit is connected to a data path and upon detecting a parity error, it sends a signal that latches up a flip flop which generates a parity check signal. The parity check signal in turn causes a hardware interrupt to be sent to a processor and a software interrupt handling routine analyzes the error, displays an error code on a display, and halts operation of the computer.

To improve system performance, the memory may be arranged as a sixty four bit banked memory wherein data is stored in memory in odd/even double words of thirty two bits each. On each memory access, parity is read and checked sixty four bits at a time and an error cannot be isolated to a particular memory bank, module, or field replaceable module. It is desirable to be able to isolate the error to the bank from which the error arose.

In the prior art, a parity check circuit is associated with each bank of memory along with some additional hardware that is also associated with each bank. Examples of such prior art are the following. IBM Technical Disclosure bulletin Vol 20, No 11B, April 1978, pages 4838 and 4834 disclose "Microcode Integrity Checking" in which a plurality of modules respectively feed parity check circuits and counters. The modules store count fields, in addition to the data and parity bits. Single bit errors are detected by the parity check and double bit errors are detected by the counters. The article suggests it is "easy to determine which module has failed" but fails to describe precisely how it is done.

JP 56-19593 briefly describes a "Parity Check Processing System for Memory" in which two parity check circuits from two memory banks feed a status display register. The result from the check circuits is "respectively reported separately on the status display register", and a processor can then take some action based on the content of the register. The details of the separate reporting are not disclosed.

US patent 4,809,276 - R A LEMAY et al discloses a "Memory Failure Detection Apparatus" having banks of memory and error detection and correction circuits associated with each bank. A counter is also associated with each bank and records the number of corrections that have occurred. A processor periodically polls the counters and provides messages to replace memory boards.

An aim of the present invention is to provide a simple, low cost parity checking for a banked memory computer system in which the bank in which an error occurs can be readily identified.

In accordance with the present invention, there is now provided a parity check system for a personal computer having an interruptible microprocessor and a main memory having first and second memory banks, the parity check system comprising: first and second parity check units respectively connected to the first and second memory banks, the first check unit generating a parity error signal upon detecting a parity error in data being accessed from the first memory bank and the second check unit generating a parity error signal upon detecting a parity error in data being accessed from the second memory bank; characterised in that the system comprises: first and second latches respectively connected to the first and second check units for receiving the parity error signals therefrom, each latch having an output line for providing an active signal upon receiving a parity error signal from the check unit connected thereto; first logic means connected to the output lines of the latches for transmitting a parity error interrupt signal to the microprocessor in response to either of the latches providing an active signal; a single bit storage device for storing a check bit for indicating which one of the first and second memory banks was being accessed during a memory access in which a parity error occurs, the check bit being switchable between a first state and second state; second logic means connected to the output line of the first latch and the storage device for switching the check bit from the second state to the first state only in response to the first check unit generating the first parity error signal; and parity error interrupt handling means connected to the storage device for reading the check bit in response to the microprocessor receiving the parity error interrupt signal and determining from the state of the check bit which one of the first and second memory banks caused the parity error during the memory access, the interrupt handling means determining the first memory bank caused the parity error when the check bit is in the second state and determining the second memory bank caused the parity error when the check bit is in the second state.

In an example of the present invention to be described later, there is provided a simple, low cost parity check for a two bank memory system that eliminates the need for duplicate hardware to be associated with each bank in order to provide an indication of which bank produced a parity error. The two banks are connected respectively to two parity check circuits which cause an interrupt when a parity error occurs. One circuit is further operative to set a check bit in a register. When an interrupt occurs, an interrupt handling routine determines the status of the check bit and provides a message indicating which bank caused the error.

An embodiment of the present invention will now be described with reference to the accompanying drawings in which:
Fig. 1 is a block diagram of a personal computer embodying the invention; and
Fig. 2 is a flow diagram of functional steps carried out by the computer shown in Fig. 1.

Referring now to the drawing, a personal computer includes a microprocessor 10 connected to a main memory comprised of two memory banks 12 and 14 through two parity check units 16 and 18. A memory control 20 is connected to the microprocessor and to the memory banks for controlling operation of the main memory. The parity check units work in conventional fashion and are operative to generate parity error signals when parity errors are detected thereby.

Two latches or flip flops 22 and 24 have output lines 28 and 30 connected to the inputs of a two input OR circuit or logic unit 26. The output lines are also respectively connected back to the clear inputs of the latches to latch up the output signals, when they arise. Latches 22 and 24 further have input lines 25 and 27 respectively connected to outputs from parity check units 16 and 18. The latches further have input lines 29 and 31 connected to memory control 20 to receive a clock signal from the address stobe line thereof. When either parity check unit detects a parity error, a parity error signal is sent over its respective output line 25 or 27 to the appropriate one of latches 22 and 24 and upon receiving the next clock signal, such latch is set and produces an active output signal. The active output from the set latch then switches OR circuit 26 to send a parity error signal to an interrupt controller 34. This controller is connected by line 36 to an interrupt input of microprocessor 10 to initiate an interrupt in response to receiving a parity error signal from unit 26.

Output 30 from latch 22 is also connected to an input of a single bit position 41 of a register 40 of an addressable I/O port 38. An active signal from latch 22 sets bit position 41 (also referred to herein as a check bit) in response to a parity error signal arising from memory bank 12.

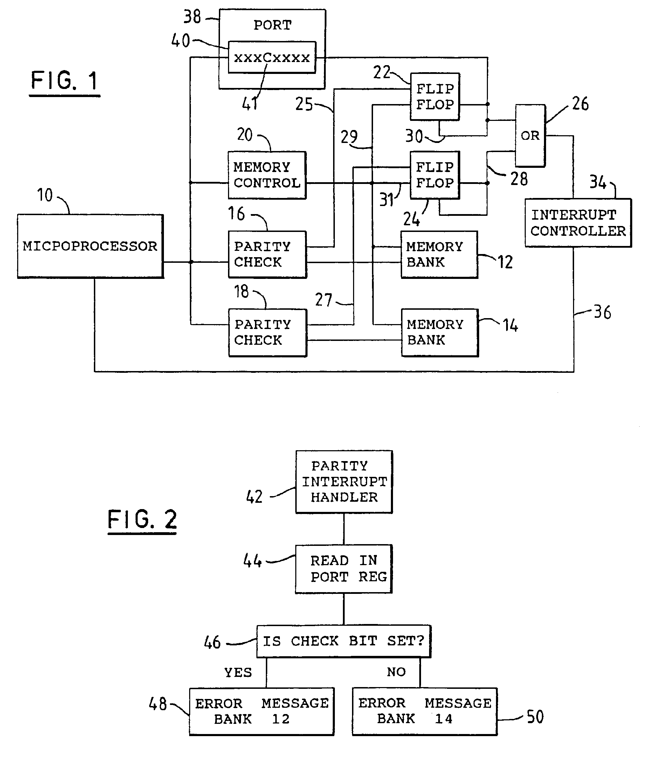

The personal computer also includes a conventional interrupt handler that is modified in an obvious manner to provide the functions shown in Fig. 2. When the microprocessor initiates an interrupt, the interrupt handling routine first determines the interrupt is caused by a parity error and branches into a parity interrupt handler 42. This first causes in step or function 44 the contents of I/O port 38 register 40 to be read into the microprocessor. Step 46 then determines whether or not the check bit of register 40 has been set. If it has, then a message is generated in step 48 indicating that a parity error occurred in memory bank 12. Otherwise, a message is generated in step 50 indicating the error arose in memory bank 14. The error messages can then be used to service or replace the failing memory bank. It should also be noted that in the unlikely event parity errors occur in both banks, the resultant message would only indicate the error came from bank 12. After such bank has been fixed, and upon further testing of the computer, the other bank should reproduce the error and it can be replaced after the error message has been outputted.

The principal advantage of the present invention is the simplicity of the solution to the problem of identifying the memory bank from which a parity error arises.

## Claims

1. A parity check system for a personal computer having an interruptible microprocessor (10) and a main memory having first and second memory banks (12,14), the parity check system comprising:
first and second parity check units (16,18) respectively connected to the first and second memory banks (12,14), the first check unit (16) generating a parity error signal upon detecting a parity error in data being accessed from the first memory bank (12) and the second check unit (18) generating a parity error signal upon detecting a parity error in data being accessed from the second memory bank (14);
characterised in that the system comprises:
first and second latches (22,24) respectively connected to the first and second check units (16,18) for receiving the parity error signals therefrom, each latch (16,18) having an output line for providing an active signal upon receiving a parity error signal from the check unit (16,18) connected thereto; first logic means (26,34) connected to the output lines of the latches (16,18) for transmitting a parity error interrupt signal to the microprocessor (10) in response to either of the latches (22,24) providing an active signal;
a single bit storage device (41) for storing a check bit for indicating which one of the first and second memory banks (12,14) was being accessed during a memory access in which a parity error occurs, the check bit being switchable between a first state and second state;
second logic means connected to the output line of the first latch (22) and said storage device (41) for switching the check bit from the second state to the first state only in response to the first check unit (16) generating the first parity error signal; and
parity error interrupt handling means (10) connected to the storage device (41) for reading the check bit in response to the microprocessor (10) receiving the parity error interrupt signal and determining from the state of the check bit which one of the first and second memory banks (12,14) caused the parity error during the memory access, the interrupt handling means (10) determining the first memory bank (12) caused the parity error when the check bit is in the second state and determining the second memory bank (14) caused the parity error when the check bit is in the second state.

2. A parity check system as claimed in claim 1, wherein said parity error interrupt handling means (10) generates a first message when the check bit is in the first state indicating that said first memory bank (12) caused a parity error and generates a second message when the check bit is in the second state indicating that the second memory bank (14) caused a parity error.

3. A parity check system as claimed in claim 2, wherein said first logic means (26,34) comprises:
an OR logic circuit (26) connected to the output lines of said first and second latches and being operative in response to receiving one of the active signals from either one of said latches to generate a parity check signal; and
an interrupt controller (34) having an input connected to receive the parity check signal from said OR logic circuit (26), the interrupt controller (34) being further connected to the microprocessor (10) to initiate a parity error interrupt in response to receiving the parity check signal.

4. A parity check system as claimed in any preceding claim, wherein said first and second latches receive a clock signal from an address strobe line (31) provided by the memory control means (20).

5. A computer system comprising a parity check system as claimed in any preceding claim.

## Patentansprüche

1. Ein Paritätsprüfsystem für einen Personalrechner mit einem unterbrechungsfähigen Mikroprozessor (10) und einem Hauptspeicher mit ersten und zweiten Speicherbänken (12, 14), wobei das Paritätsprüfsystem folgendes umfaßt:
Erste und zweite Paritätsprüfeinheiten (16, 18), die jeweils mit den ersten und zweiten Speicherbänken (12, 14) verbunden sind, wobei die erste Prüfeinheit (16) ein Paritätsfehlersignal bei Erkennung eines Paritätsfehlers in den Daten erzeugt, auf die von der ersten Speicherbank aus (12) zugegriffen wird, und die zweite Prüfeinheit (18) ein Paritätsfehlersignal bei Erkennung eines Paritätsfehlers in den Daten erzeugt, auf die von der zweiten Speicherbank (14) aus zugegriffen wird; dadurch gekennzeichnet, daß das System folgendes umfaßt:
erste und zweite Signalspeicher (22, 24), die jeweils mit ersten und zweiten Prüfeinheiten (16, 18) verbunden sind, um Paritätsfehlersignale von diesen zu empfangen, wobei jeder Signalspeicher (16, 18) über eine Ausgabeleitung verfügt, um bei Empfang eines Paritätsfehlersignals von der mit ihm verbundenen Prüfeinheit (16, 18) ein aktives Signal auszugeben; erste Logikmittel (26, 34), die mit den Ausgabeleitungen der Signalspeicher (16, 18) verbunden sind, um ein Paritätsfehlerunterbrechungssignal an den Mikroprozessor (10) als Antwort auf einen der Signalspeicher (22, 24) zu übertragen, von dem ein aktives Signal ausgesendet wird;
eine Einzelbit-Speichereinheit (41) zum Speichern eines Prüfbits, um anzugeben, auf welche der ersten und zweiten Speicherbänke (12, 14) während eines Speicherzugriffs, bei dem ein Paritätsfehler auftrat, zugegriffen wurde, wobei das Prüfbit zwischen einem ersten und einem zweiten Zustand schaltbar ist;
zweite Logikmittel, die mit der Ausgabeleitung des ersten Signalspeichers (22) und der Speichereinheit (41) verbunden sind, um das Prüfbit von dem zweiten Zustand in den ersten Zustand nur als Antwort auf die erste Prüfeinheit (16) umzuschalten, welche das erste Paritätsfehlersignal erzeugt; und
mit der Speichereinheit (41) verbundene Paritätsfehlerunterbrechungsbehandlungsmittel (10), um das Prüfbit als Antwort auf den Mikroprozessor (10) zu lesen, der das Paritätsfehlerunterbrechungssignal empfängt und aus dem Zustand des Prüfbits ermittelt, welche der ersten und zweiten Speicherbänke (12, 14) den Paritätsfehler bei dem Speicherzugriff verursacht hat, wobei das Unterbrechungsbehandlungsmittel (10) folgert, daß die erste Speicherbank (12) den Paritätsfehler verursacht hat, wenn sich das Prüfbit im ersten Zustand befindet, bzw. folgert, daß die zweite Speicherbank (14) den Paritätsfehler verursacht hat, wenn sich das Prüfbit im zweiten Zustand befindet.

2. Ein Paritätsprüfsystem wie in Patentanspruch 1 offenbart, bei dem das Paritätsfehlerunterbrechungsbehandlungsmittel (10) eine erste Meldung erzeugt, wenn sich das Prüfbit im ersten Zustand befindet, wodurch angegeben wird, daß die erste Speicherbank (12) einen Paritätsfehler verursacht hat, und eine zweite Meldung erzeugt, wenn sich das Prüfbit im zweiten Zustand befindet, wodurch angegeben wird, daß die zweite Speicherbank (14) einen Paritätsfehler verursacht hat.

3. Ein Paritätsprüfsystem wie in Patentanspruch 2 offenbart, in dem das erste Logikmittel (26, 34) folgendes umfaßt:
Eine ODER-Logikschaltung (24), die mit den Ausgabe-leitungen der ersten und zweiten Signalspeicher verbunden ist und dazu dient, eines der aktiven Signale von einem der Signalspeicher zu empfangen, um ein Paritätsprüfsignal zu erzeugen; und
eine Unterbrechungssteuereinheit (34), die mit einem Eingang verbunden ist, um das Paritätsprüfsignal von der ODER-Logikschaltung (26) zu empfangen, wobei die Unterbrechungssteuereinheit überdies mit dem Mikroprozessor (10) verbunden ist, um eine Paritätsfehlerunterbrechung als Antwort auf den Empfang des Paritätsprüfsignals einzuleiten.

4. Ein Paritätsprüfsystem wie in einem der vorstehenden Patentansprüche offenbart, in dem erste oder zweite Signalspeicher ein Taktsignal von einer Adressierungsimpulsleitung (31) empfangen, das von dem Speichersteuermittel (20) bereitgestellt wird.

5. Ein Computersystem, das ein Paritätsprüfsystem wie in einem der vorstehenden Patentansprüche offenbart beinhaltet.

## Revendications

1. Système de contrôle de parité pour un ordinateur personnel comportant un microprocesseur interruptible (10) et une mémoire principale ayant des premier et second blocs de mémoire (12, 14), le système de contrôle de parité comprenant :
Des première et seconde unités de contrôle de parité (16, 18) respectivement connectées au premier et second blocs de mémoire (12, 14), la première unité de contrôle (16) produisant un signal d'erreur de parité sur détection d'une erreur de parité dans les données auxquelles on a accédé dans le premier bloc de mémoire (12) et la seconde unité de contrôle (18) produisant un signal d'erreur de parité lorsque l'on détecte une erreur de parité dans les données auxquelles on a accédé dans le second bloc de mémoire (14),
caractérisé en ce que le système comprend :
des première et seconde bascules (22, 24) respectivement connectées aux première et seconde unités de contrôle (16, 18) pour recevoir les signaux d'erreur de parité provenant de celles-ci, chaque bascule (16, 18) ayant une ligne de sortie pour délivrer un signal actif sur réception d'un signal d'erreur de parité de l'unité de contrôle (16, 18) connectée à celle-ci, un premier moyen logique (26, 34) connecté aux lignes de sortie des bascules (16, 18) pour transmettre un signal d'interruption sur erreur de parité au microprocesseur 10 en réponse à l'une des bascules (22, 24) délivrant un signal actif,
un dispositif de mémorisation à un seul bit (41) pour mémoriser un bit de contrôle pour indiquer auquel des premier et second blocs de mémoire (12, 14) on a accédé pendant un accès mémoire au cours duquel une erreur de parité s'est produite, le bit de contrôle étant commutable entre un premier état et un second état,
un second moyen logique relié à la ligne de sortie de la première bascule (22) et audit dispositif de mémorisation (41) pour commuter le bit de contrôle du second état au premier état uniquement en réponse à la première unité de contrôle (16) produisant le premier signal d'erreur de parité, et
un moyen de traitement d'interruption d'erreur de parité (10) relié au dispositif de mémorisation (41) pour lire le bit de contrôle en réponse au microprocesseur (10) recevant le signal d'interruption d'erreur de parité et pour déterminer à partir de l'état du bit de contrôle lequel des premier et second blocs de mémoire (12, 14) à provoqué l'erreur de parité pendant l'accès mémoire, la moyen de traitement d'interruption (10) déterminant que le premier bloc de mémoire (12) a provoqué l'erreur de parité lorsque le bit de contrôle est dans le second état et déterminant que le second bloc de mémoire (14) a provoqué l'erreur de parité lorsque le bit de contrôle est dans le second état.

2. Système de contrôle de parité selon la revendication 1, dans lequel ledit moyen de traitement d'interruption d'erreur de parité produit un premier message lorsque le bit de contrôle est dans le premier état indiquant que ledit premier bloc de mémoire a provoqué une erreur de parité et produit un second message lorsque le bit de contrôle est dans le second état indiquant que le second bloc de mémoire (14) a provoqué une erreur de parité.

3. Système de contrôle de parité selon la revendication 2, dans lequel ledit premier moyen logique comprend :
un circuit logique OU connecté aux lignes de sortie des première et seconde bascules et agissant en réponse à la réception d'un des signaux actifs provenant de l'une desdites bascules pour produire un signal de contrôle de parité, et
un contrôleur d'interruption ayant une entrée connectée pour recevoir le signal de contrôle de parité provenant du circuit logique OU, le contrôleur d'interruption étant de plus connecté au microprocesseur (10) pour lancer une interruption d'erreur de parité en réponse à la réception du signal de contrôle de parité.

4. Système de contrôle de parité selon l'une quelconque des revendications précédentes, dans lequel lesdites bascules reçoivent un signal d'horloge à partir d'une ligne de validation d'adresse (31) fournie par le moyen de commande de la mémoire (20).

5. Système d'ordinateur comprenant un système de contrôle de parité selon l'une quelconque des revendications précédentes.
